# EUROPEAN PATENT APPLICATION

(11) **EP 2 279 930 A1**
(43) Date of publication of application: **02.02.2011**
(21) Application number: 10155934.2
(22) Date of filing: 09.03.2010
(51) Int. Cl.: B62D 27/02, B29L 31/30, B29K 105/06

(54) **Multipurpose composite bracket**

(30) Priority: 28.07.2009 TR 200905857
(71) Applicant: Anlas, Abdullah, 34744 Istanbul (TR)
(72) Inventor: Anlas, Abdullah, 34744 Istanbul (TR)
(74) Representative: Ergün, Mevci

(57) **Abstract**

The invention relates to a bracket which is used in all sectors where it is required mainly in basic and sub- industries in automotive sector and in tool, mould, apparatus, fixture, connection or mounting fields of machine manufacturers and serial manufacturing firms, and it is manufactured from composite material.

## Description

### Field of the Invention

The invention relates to a bracket which can be used easily in all sectors where it is required mainly in basic and sub- industries in automotive sector and in tool, mould, apparatus, fixture, connection or mounting fields of machine manufacturers and serial manufacturing firms, and which is manufactured from composite material.

### Background of the Invention

In prior art; mechanisms in which the part that will be manufactured in serial manufacture is fixed during the process in accordance with the process to be carried out and with measurements determined by tolerances without giving rise to the operator faults and/or fastened onto the parts which are controlled in previous process from reference areas have been improved. These mechanisms (especially in automotive sector) are called as fixture. The auxiliary equipment which is used for proper positioning of the parts to be manufactured and for making the connections thereof on fixture is generally called as brackets (or fixture brackets).

Brackets are frequently used mainly in basic and sub- industries in automotive sector and in tool, mould, apparatus, fixture, connection or mounting fields of machine manufacturers and serial manufacturing firms. The said brackets have an important place in world market.

Brackets used at present are manufactured from metals such as iron etc. However, these brackets are quite heavy (because the raw material thereof is heavy) and they cause deformation in time where they were mounted. Another disadvantage of these metal brackets is that the manufacturing steps thereof (processing, welding, grinding, dyeing, screw-cutting etc.) are graded and long and manufacture thereof cannot be carried out quickly. The fact that the manufacture duration is long results in the extension of the time to meet the requirements of the clients and also not meeting the different model demands positively all the time.

Another disadvantage of metal brackets is that expansion and contraction features thereof are high because of their structures. The change of these brackets by being affected from air conditions causes deviation of measurements. Change of measurements in air, water and heat changes causes measurement deviation also in materials which will be manufactured. The said situation creates an important problem in manufacturing steps which require sensitivity. In addition, the fact that metal brackets undergo corrosion quickly because of welding that is applied thereon during manufacture and/or air conditions causes irrecoverable problems on the material.

The fact that these brackets have high electric conductivity because of metal feature can cause damage to people or equipment in the place of use during manufacturing. Another important problem that is seen in the said brackets is that they rust quickly because of the structures thereof.

The fact that processing thereby labor thereof is long and arduous and that manufacturing time which is very important in serial manufactures is long results in high costs of metal brackets. Long labor time thereof causes increase in workmanship defaults during the manufacture of these materials. This also causes additional increase in work burden and costs.

The invention that is improved based on the shortcomings in the prior art relates to a bracket which can be used easily in all sectors where it is required mainly in basic and sub- industries in automotive sector and in tool, mould, apparatus, fixture, connection or mounting fields of machine manufacturers and serial manufacturing firms, and which is manufactured from composite material.

The figures of "Multipurpose Composite Bracket (apparatus) are in the appended pages and they are as follows:

### Accompanying drawings for the description of the Invention

**Figure-1 and Figure-2** are the application of composite bracket that is the subject of the invention (vertical model).
**Figure-3 and Figure-4** are the application of composite bracket that is the subject of the invention (side model).
**Figure-5 and Figure-6** are a different application of composite bracket that is the subject of the invention.
**Figure-7 and Figure-8** are a different application of composite bracket that is the subject of the invention (the model whose top is angular)
**Figure-9 and Figure-10** are a different application of composite bracket that is the subject of the invention.
**Figure-11** is a different application of composite bracket in which metal part is located therein

### Accompanying reference numbers for the description of the Invention

**1-** Strength gap
**2-** Connection holes
**3-** Bushing
**4-** Holes that are connected to the surface
**5.** Metal part

### Description of the Invention

The said invention is a bracket (apparatus) that is manufactured from composite or the derivatives thereof (fiberglass reinforced unsaturated polyester, thermoset resins to which resin additives are added, SMC/BMC, fibrous filling material etc.).

In the application of the bracket subject of the invention that is seen in figure-1 and 2, a vertical connection apparatus which is manufactured completely from composite material can be seen and in figure-3 and 4, side connection application thereof can be seen.

The said invention is a bracket (apparatus) which is manufactured from composite material and is used for fixation and/or connection in all sectors where it is required mainly in basic and sub- industries in automotive sector and in tool, mould, apparatus, fixture, connection or mounting fields of machine manufacturers and serial manufacturing firms and in sectors where connection and weld craftsmanship are required, and which can be manufactured in different models and variable sizes in accordance with the purpose.

With the invention, a significant profit is obtained in respect of labor thereby manufacture duration by using moulding-pressing system and by eliminating many labors such as processing, welding, grinding, dyeing, screw-cutting etc. Since the mounting thereof is easy, profit is obtained in respect of labor and time.

Composite materials are manufactured preferentially with moulding method. Therefore, they always have the desired sizes. The moulding method provides quick, faultless and easy manufacturing step. This situation enables to save from labor and time. In addition by means of moulding method, manufacture in any model desired by the client can be carried out. The apparatus which is the subject of the invention can be manufactured as a whole or can be manufactured also in parts. However, manufacturing in whole is preferred more to keep the labor and mounting time short.

Since composite brackets are resistant to air, water and heat because of their structure, they are not exposed to any corrosion or bending when any heat change occurs. Since they are light and robust, they do not undergo deformation in welding, control, mounting fixtures and other places of use. Composite brackets can be manufactured in any colors in accordance with the demand of the client. They have a long-life because of the materials inside thereof. Although they are very light (compared to metal), their features of weight lifting and load bearing are very high. They do not rust and they do not require dyeing.

Electric conductivity of composite materials is very low because of their structures. Therefore the usage of brackets is not risky in respect of human health. The fact that composite material is ecological enables the product subject of the invention to be also ecological.

On the invention, preferably there is at least one connection hole (2). These holes (2) can be in desired number and diameter according to the model. For increasing the strength, preferably pitch spring attachment is located to the said connection holes (2). Depending on the field in which it will be used and the purpose, the said invention can be manufactured in different sizes and models (square, angular-top, side connection, square application etc.).

They do not undergo any deformation during shelf and usage life. Their features of expansion and contraction are almost non-existing. The costs thereof are quite low. Their quick serial manufacture is possible, since there is cad data thereof.

Optionally metal connection part (5) can be located into the composite bracket that is the subject of the invention. On the said metal part (5), metric thread which changes according to model is installed for connecting the parts.

On the invention, preferably there is at least one surface connection hole (4) for providing connection to surface and there are stiffened bushings (3) in these holes (4). For increasing the strength, preferably at least one strength gap (1) can be formed into the composite bracket.

It is obvious that someone skilled in the art will be able to apply novelty that is introduced in the invention by using similar embodiments. Therefore, it should be taken into consideration that similar-alternative embodiments mean infringement of our application.

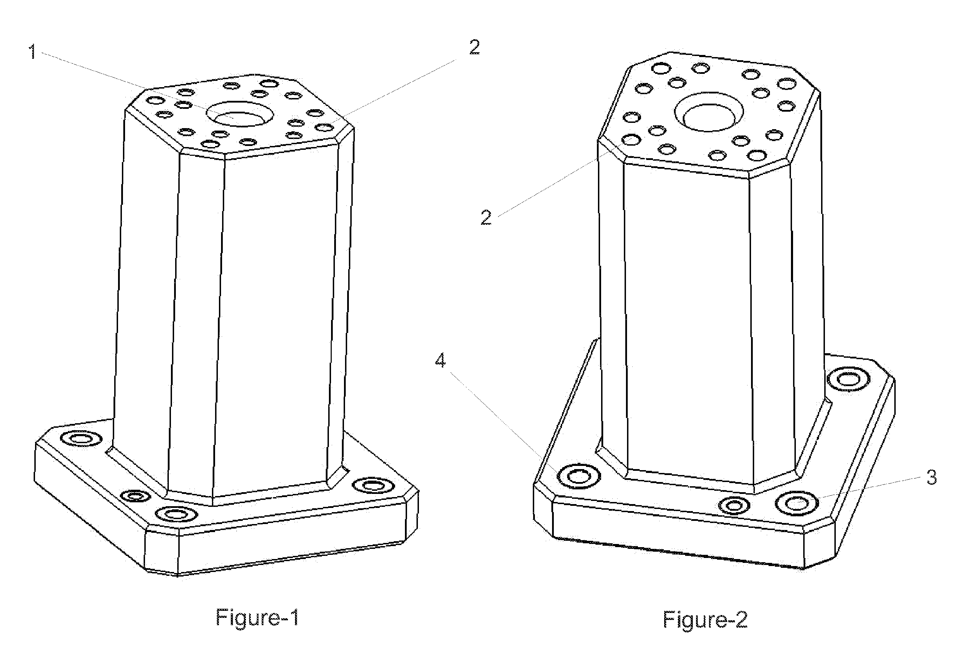

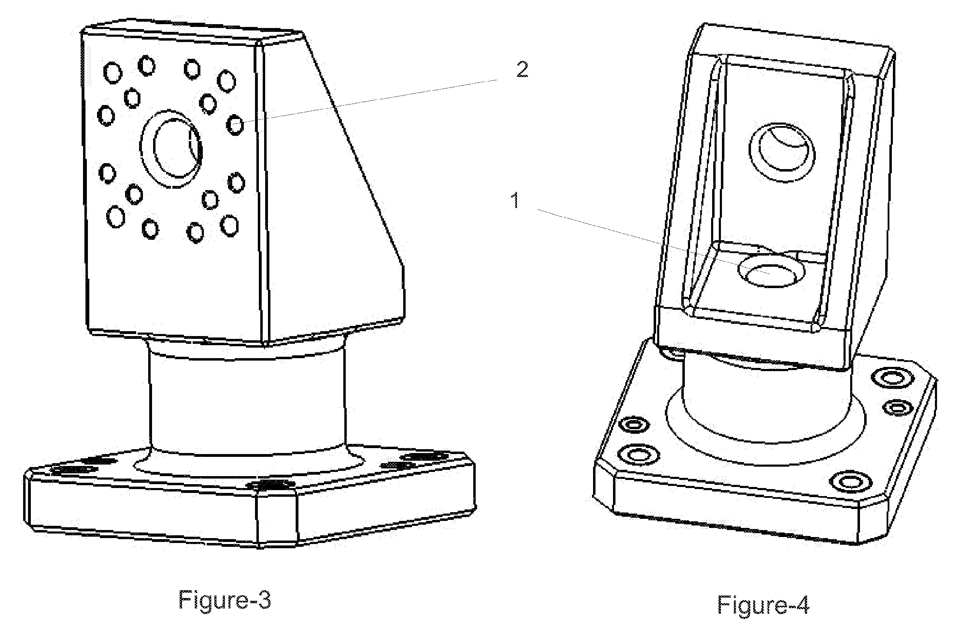

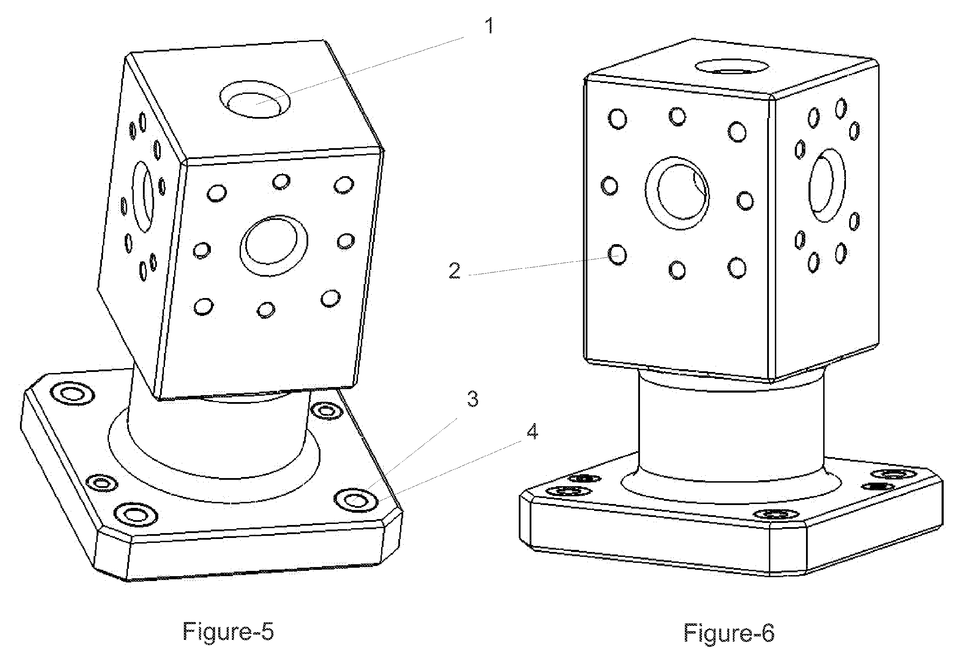

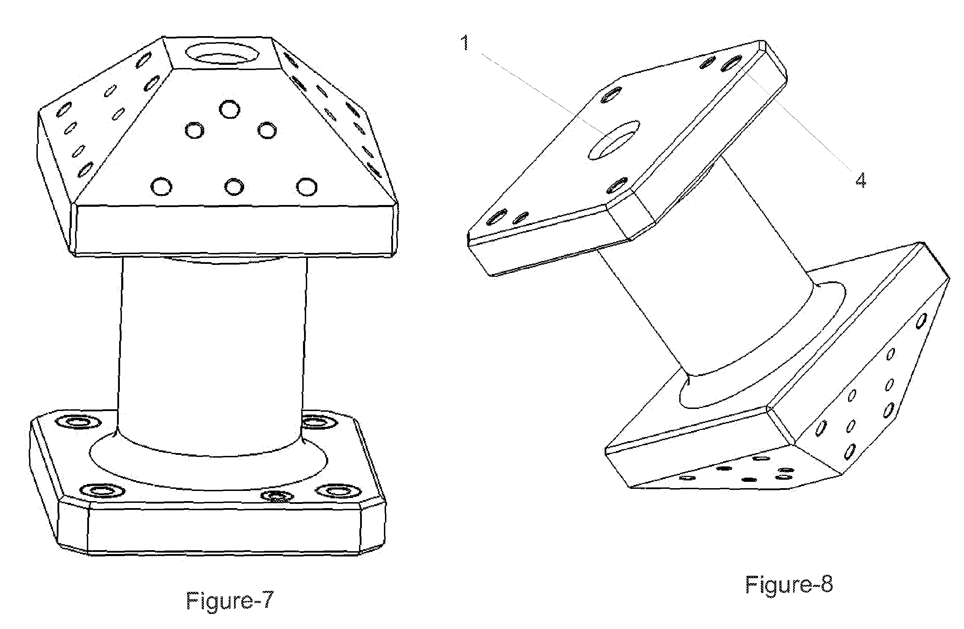

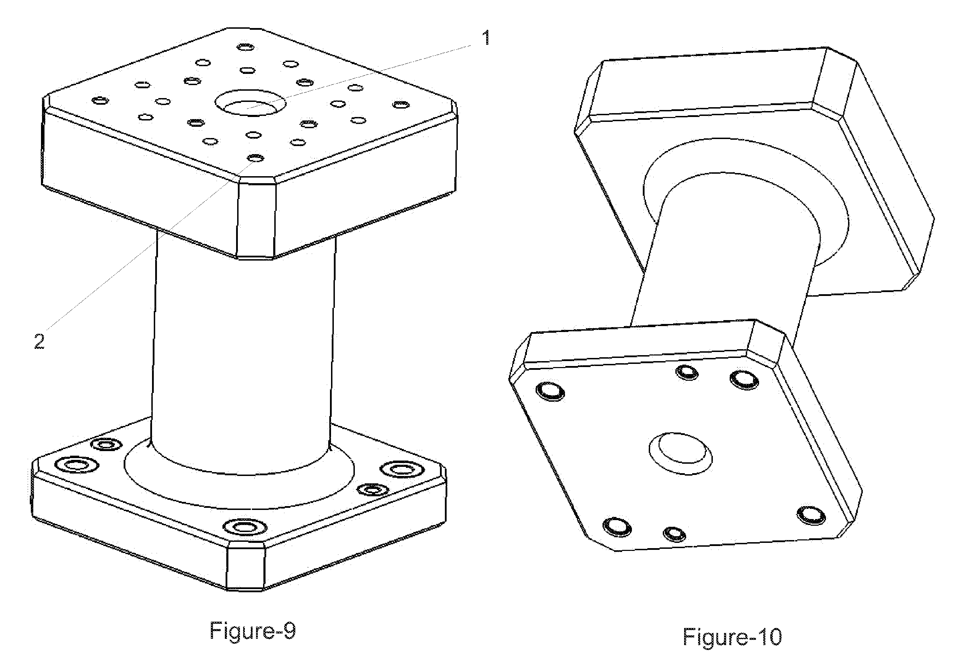

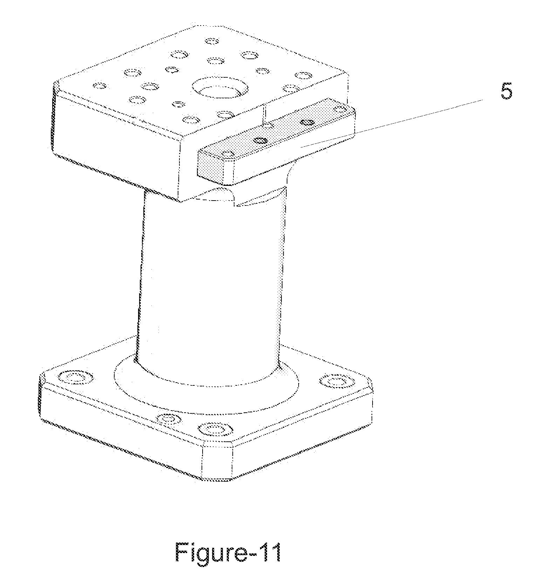

## Claims

1. A bracket (apparatus) which is used for fixation and/or connection in all sectors where it is required mainly in basic and sub-industries in automotive sector and in tool, mould, apparatus, fixture, connection or mounting fields of machine manufacturers and serial manufacturing firms; wherein it is manufactured from composite material or the derivates thereof (fiberglass reinforced unsaturated polyester, thermoset resins to which resin additive materials are added, SMC/BMC, fibrous filling materials etc.).

2. A bracket (apparatus) according to Claim 1; wherein preferably it is manufactured by moulding- pressing system.

3. A bracket (apparatus) according to Claim 1 and 2; wherein it is manufactured in different model and sizes according to demand.

4. A bracket (apparatus) according to one and/or a few of the preceding claims; wherein there is at least one strength gap (1) thereon.

5. A bracket (apparatus) according to one and/or a few of the preceding claims; wherein there is at least one connection (2) and at least one surface connection hole (4) thereon.

6. A bracket (apparatus) according to one and/or a few of the preceding claims; wherein preferably there is pitch spring attachment in the connection holes (2).

7. A bracket (apparatus) according to one and or a few of the preceding claims; wherein optionally there is metal connection part (5) therein.

8. A bracket (apparatus) according to one or a few of the preceding claims; wherein preferably it is manufactured in whole.
